Europäisches Patentamt

European Patent Office

Office européen des brevets

(19)

(11) Veröffentlichungsnummer: **0 221 411**
A2

(12)     **EUROPÄISCHE PATENTANMELDUNG**

(21) Anmeldenummer: 86114299.0

(22) Anmeldetag: 16.10.86

(51) Int. Cl.⁴ **B01J 37/06 , //B01J23/54**

(30) Priorität: 05.11.85 DE 3539125

(43) Veröffentlichungstag der Anmeldung:
13.05.87 Patentblatt 87/20

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Vogt, Wilhelm, Dr.
Bellerstrasse 74
D-5030 Hürth(DE)
Erfinder: Glaser, Hermann
Magdalenenweg 16
D-5042 Erftstadt(DE)
Erfinder: Goedicke, Eitel, Dr.
Asternweg 7
D-5010 Bergheim(DE)

(54) Verfahren zur Herstellung eines Trägerkatalysators.

(57) Zur Herstellung eines Trägerkatalysators durch Imprägnieren eines mit einer Schicht aus hitzebeständigem Metalloxid versehenen keramischen Wabenkörpers mit der wäßrigen Lösung mindestens einer löslichen Verbindung von Platin, Rhodium oder Palladium und gegebenenfalls von Salzen von Nichtedelmetallen läßt man zur Trocknung des imprägnierten Wabenkörpers durch ihn ein über seinen Querschnitt gleichmäßig verteiltes Trocknungsgas mit Temperaturen zwischen 20 und 400°C strömen. Dabei wählt man Temperatur und Menge des Trocknungsgases so, daß die Wasserverdampfung aus dem imprägnierten Wabenkörper nach 30 bis 300 Sekunden abgeschlossen ist. Schließlich tempert man den getrockneten imprägnierten Wabenkörper 1 bis 3 Stunden bei Temperaturen bis 1000°C.

0 221 411

## Verfahren zur Herstellung eines Trägerkatalysators

Die vorliegende Erfindung betrifft ein Verfahren zur Herstellung eines Trägerkatalysators durch Imprägnieren eines mit einer Schicht aus hitzebeständigem Metalloxid versehenen keramischen Wabenkörpers mit der wäßrigen Lösung mindestens einer löslichen Verbindung von Platin, Rhodium oder Palladium und gegebenenfalls von Salzen von Nichtedelmetallen, Trocknung des imprägnierten Wabenkörpers und seine Temperung.

Es ist bekannt, zur Herstellung von Edelmetallkatalysatoren mit einer Aluminiumoxid-Schicht überzogene keramische Wabenkörper mit Edelmetallsalzen zu imprägnieren. Dabei ist es zur Zurückdrängung des chemisorptiven Anteils erforderlich, entweder eine einen pH-Wert von 1 bis 2 aufweisende Imprägnierlösung mit einem Gehalt der die Katalysatoraktivität verbessernden Salzen des Eisens, Nickels, Cers und Zirkoniums oder eine einen pH-Wert von etwa 10 aufweisende Imprägnierlösung mit einem Gehalt an Komplexbildnern wie Nitrilotriessigsäure oder Ethylendiaminotetraessigsäure zu verwenden. Bei beiden Imprägnierungsvarianten setzen sich bei der Trocknung der imprägnierten Wabenkörper die Edelmetalle bzw. die Nichtedelmetallsalze bevorzugt dort ab, wo die Imprägnierlösung unmittelbar vor dem Ausscheiden der in ihr enthaltenen Salze durch Dochteffekte hinwanderte. Beide Imprägniermethoden führen nur dann zu einer gleichmäßigen Imprägnierung des Wabenkörpers, wenn die Wasserdampfung an allen Stellen des Wabenkörpers gleichmäßig erfolgt. Dies ist beim Wabenkörper insbesondere in radialer Richtung erforderlich, weil mangelnde Aktivkomponenten-Konzentration in radialer Richtung sich beim Durchleiten von Gasgemischen durch solche Wabenkörper wie partielle Bypässe auswirken.

Es ist daher Aufgabe der vorliegenden Erfindung, ein Verfahren zur Herstellung eines Trägerkatalysators durch Imprägnieren eines keramischen Wabenkörpers mit der wäßrigen Lösung von mindestens einer Edelmetallverbindung und gegebenenfalls Nichtedelmetallsalzen anzugeben, bei welchem bei der Trocknung des imprägnierten Wabenkörpers das Auftreten von Konzentrationsunterschieden insbesondere in radialer Richtung vermieden wird. Das wird erfindungsgemäß dadurch erreicht, daß man durch den imprägnierten Wabenkörper ein über seinen Querschnitt gleichmäßig verteiltes Trocknungsgas mit Temperaturen zwischen 20 und 400°C strömen läßt, wobei man Temperatur und Menge des Trocknungsgases so wählt, daß die Wasserverdampfung aus dem imprägnierten Wabenkörper nach 30 bis 300 Sekunden abgeschlossen ist und daß man den getrockneten imprägnierten Wabenkörper 1 bis 3 Stunden bei Temperaturen bis 1000°C tempert.

Das Verfahren gemäß der Erfindung kann weiterhin wahlweise auch noch dadurch ausgestaltet sein, daß

a) als Trocknungsgas Luft dient;
b) als Trocknungsgas ein Brennerabgas dient;
c) dem Brennergas zur Temperatureinstellung Kaltgas zugemischt ist.

Mit dem erfindungsgemäßen Verfahren ist es möglich, innerhalb von Wabenkörpern sowohl in ihrer axialen als auch radialen Richtung Edelmetalle und gegebenenfalls Nichtedelmetalle in befriedigend gleichmäßigen Konzentrationen zu deponieren.

Beispiel 1 (Vergleichsbeispiel)

79,75 g Platinchlorwasserstoffsäure (mit 40 % Pt-Gehalt)
15,45 g Rhodiumchlord (mit 38 % Rh-Gehalt)
704 g Zirkonnitratlösung (mit 14,5 % Zr-Gehalt)
wurden in Wasser gelöst und auf 2 l Lösung auf aufgefüllt. Die Dichte der Lösung betrug 1.149 g/cm³. Die Lösung enthielt:
31,9 g Pt = 1,388 % Pt
5,87 g Rh = 0,255 % Rh
102,02 g Zr = 4,44 % Zr

Ein 725 g wiegender keramischer Wabenkörper, welcher durch mehrmalige Tauchung in eine Suspension von peptisiertem Aluminiumoxidhydrat und Temperung bei 600°C mit 16 Gewichts% $\gamma$-$Al_2O_3$ belegt worden war, wurde mit dieser Lösung imprägniert. Der Wabenkörper nahm 138,2 ml der Lösung auf, was einer Edelmetallmenge von 2,09 g Pt und 0,4 g Rh sowie 0,97 g Zr entspricht.

2

Der Wabenkörper wurde zur Entfernung anhaftender Tröpfchen mit Luft kurz ausgeblasen und anschließend 10 Stunden im Trockenschrank bei 100°C getrocknet. Nach zweistündigem Glühen bei 600°C wurde aus der Außen-und Innenzone des Wabenkörpers eine etwa 2 cm dicke Scheibe geschnitten, deren Metallgehalte ermittelt wurden. Nach den analytisch bestimmten Werten wurden starke Schwankungen der Metallkonzentrationen zwischen der Außen-und Innenzone festgestellt. In Einzelfällen konnten bis zu 5-fach erhöhte Konzentrationen an Pt und Rh in der Außenzone gegenüber der Innenzone gefunden werden. In einem Fall wurden in der Außenzone

4320 ppm Pt

790 ppm Rh

15600 ppm Zr

gegenüber 2010 ppm Pt

450 ppm Rh

8000 ppm Zr

in der Innenzone gefunden.

Beispiel 2 (gemäß der Erfindung)

Beispiel 1 wurde mit der Änderung wiederholt, daß der Wabenkörper zur Trocknung auf den Konus eines angepaßten Trichters aufgesetzt und unter mehrmaligem Wenden des Wabenkörpers jeweils 10 Sekunden lang Luft von 20°C hindurchgesaugt wurde, wobei ein Staubsauger mit einer Saugleistung von ca. 600 Nm³/h verwendet wurde. Anschließend wurde 3 Minuten lang 300°C heiße Luft durch den Wabenkörper geblasen und der Wabenkörper 150 Minuten bei 600°C getempert. Die Metallgehalte waren unabhängig von ihrer örtlichen Lage im Wabenkörper annähernd gleich:

|     | Außenzone | Innenzone |
|-----|-----------|-----------|
| Pt  | 2910 ppm  | 2870 ppm  |
| Rh  | 558 ppm   | 550 ppm   |
| Zr  | 9800 ppm  | 9790 ppm  |

Beispiel 3 (Vergleichsbeispiel)

70,75 g $H_2[PtCl_6]$ (mit 40 % Pt-Gehalt)

15,45 g $RhCl_3$ (mit 38 % Rh-Gehalt)

324,2 g $Ce(NO_3)_3 . 6H_2O$ mit 32,27 % Ce

wurden in Wasser gelöst und auf 2 l aufgefüllt. Die Dichte der Lösung betrug 1,128 g/cm³. Die Lösung enthielt:

Pt = 31,9 g = 1,414 % Pt

Rh = 5,87 g = 0,26 % Rh

Ce = 104,63 g = 4,64 % Ce

Ein Wabenkörper gemäß Beispiel 1 wurde mit dieser Lösung imprägniert, wobei er 139,5 ml Lösung aufnahm und wie in Beispiel 1 angegeben ausgeblasen, im Trockenschrank ge trocknet, geglüht, zerschnitten und analysiert. Zwischen der Außen-und Innenzone wurden diese stark abweichenden Metallkonzentrationen ermittelt:

3

|   | Außenzone | Innenzone |
|---|-----------|-----------|
| Pt | 3420 ppm | 2900 ppm |
| Rh | 640 ppm | 550 ppm |
| Ce | 10200 ppm | 9500 ppm |

**Beispiel 4 (gemäß der Erfindung)**

Beispiel 2 wurde mit der Änderung wiederholt, daß die Lösung gemäß Beispiel 3 zum Imprägnieren des Wabenkörpers verwendet wurde. Die Metallgehalte der Außen-und Innenzone stimmten im wesentlichen überein:

|   | Außenzone | Innenzone |
|---|-----------|-----------|
| Pt | 2890 ppm | 2940 ppm |
| Rh | 585 ppm | 590 ppm |
| Ce | 9950 ppm | 9850 ppm |

**Beispiel 5 (gemäß der Erfindung)**

9,2 g $H_2[PtCl_6]$ (40 % Pt) = 3,68 g Pt
1,9 g $RhCl_3$ (37,9 % Rh) = 0,72 g Rh
51,85 g Zr-Nitratlösung (14,4 % Zr) = 7,52 g Zr
21,0 g Ce $(NO_3)_3$ . $6H_2O$ = 6,78 g Ce
wurden in Wasser gelöst und auf 250 ml aufgefüllt. Die Dichte der Lösung betrug 1,1418 g/cm³; ihr pH-Wert ca. 1.

Aus einem mit 20,6 % $\gamma$-$Al_2O_3$ und 3,01 % $CeO_2$ belegten keramischen Wabenkörper wurden Bohrlinge mit 2,5 cm Durchmesser und 7,52 cm Länge geschnitten. Das Gewicht eines Bohrlings betrug im Durchschnitt 17,88 g und sein Wasseraufnahmevermögen 3,56 g.

4 Bohrlinge wurden mit jeweils 60 g = 52,54 ml der oben beschriebenen Lösung imprägniert, anschließend mit Luft von 20°C 5 Sekunden vorgetrocknet und dann mit einem Heißluftstrom von 250°C 1 Minute lang von Restfeuchtigkeit befreit. Alle 4 Wabenstücke enthielten nach dieser Trocknung unabhängig von der Lage der entnommenen Probe etwa

|   | | | |
|---|---|---|---|
| Außen | 2860 ppm Pt | Innen | 2840-2900 ppm Pt |
| | 560 ppm Rh | | 530- 580 ppm Rh |
| | 5890 ppm Zr | | 5750-5910 ppm Zr |

Der Cergehalt wurde wegen des Cer-Anteiles in der $\gamma$-$Al_2O_3$-Belegungsschicht nicht bestimmt.

4

Beispiel 6 (gemäß der Erfindung)

In 2 l einer Tränklösung, die
325,46 g Ce(NO₃)₃ . 6H₂O = 105,02 g Ce
337,64 g Fe(NO₃)₃ . 9H₂O = 46,68 g Fe
700,14 g Zr-Nitrat-Lsg. (20 % ZrO₂) = 103,66 g Zr
·50,138 g H₂[PtCl₆] (40 % Pt) = 20,06 g Pt
10,59 g RhCl₃ (37,9 % Rh) = 4,014 g Rh
enthielt sowie eine Dicht von 1,294 g/cm³ und einen pH-Wert von ca. 1 aufwies, wurde ein keramischer Wabenkörper getaucht. Der Wabenkörper, welcher mit 17,6 % γ-Al₂O₃ beschichtet war, wog 815 g und wies ein Wasseraufnahmevermögen von 142 ml auf. Der Wabenkörper verzeichnete nach der Tränkung und kurzem Ausblasen mit Luft zur Entfernung anhaftender Tröpfchen eine Gewichtszunahme von 184 g, welche 142,2 ml Tränklösung entspricht. Durch den imprägnierten Wabenkörper wurden nun 2 Minuten lang auf 250°C vorgeheizte Luft mit einer Strömungsgeschwindigkeit von 600 Nm³/h geleitet. Schließlich wurde der Wabenkörper 90 Minuten bei 600°C getempert.

Der resultierende Katalysator war unabhängig vom Ort der Probenahme gleichmäßig mit 0,88 % Ce
0,39 % Fe
0,88 % Zr
1690 ppm Pt
340 ppm Rh
belegt. Randzonenanreicherungen durch Dochteffekte der Metallsalze traten nicht auf.

Beispiel 7 (gemäß der Erfindung)

Es wurden zwei Tränklösungen bereitet:

A) 2000 ml Lösung (Dichte: 1,2316 g/cm³; pH = 1) enthaltend
218,7 g Ce(NO₃)₃ . 6H₂O = 86,69 g CeO₂
278,7 g Fe(NO₃)₃ . 9H₂O = 38,53 g Fe = 55,04 Fe₂O₃
590,0 g Zr-Nitratlsg.(mit 14,5% Zr) = 115,66 g ZrO₂
43,43 g H₂[PtCl₆] (mit 40 % Pt) = 17,41 g Pt
8,56 g RhCl₃ (mit 37,9 % Rh) = 3,24 g Rh
und

B) 1500 ml Lösung (Dichte: 1,4083 g/cm³; pH = 1) enthaltend
600,5 g Zr-Nitratlösung (14,5% Zr) = 87,07 g Zr = 117,6g ZrO₂
242,85 g Ce(NO₃)₃ . 6H₂O = 78,36 g Ce = 96,27g CeO₂
215,64 g Ni(NO₃)₂ . 6H₂O = 43,54 g Ni = 55,4 g NiO
314,9 g Fe(NO₃)₃ . 9H₂O = 43,54 g Fe = 62,2 g Fe₂O₃
40,97 g H₂[PtCl₆] (mit 40 % Pt) = 16,39 g Pt = 16,39g Pt
8,65 g RhCl₃ (mit 37,9 % Rh) = 3,28 g Rh = 3,28 g Rh

Diese Lösungen wurden zum Imprägnieren von mit Aluminiumoxid beschichteten, keramischen Wabenkörpern verwendet; und zwar

|  | Lösung A | Lösung B |
|---|---|---|
| Wabenkörpergewicht | 770,1 g | 766,0 g |
| $Al_2O_3$-Schicht | 17,52 % | 17,56 % |
| Wasseraufnahmevermögen | 159,5 ml | 133,1 ml |
| Gewicht des Wabenkörpers nach Imprägnierung, Trocknung und Temperung | 809,7 g | 814,7 g |

Die Trocknung erfolgte im Heißluftstrom (250°C; 2 Minuten lang; 600 Nm³/h) und die Temperung 2 Stunden bei 700°C. Auch im Fall der Lösung B mit der hohen Metallsalzkonzentration wurde keine Salzanreicherung (Verkrustungen) infolge Dochteffektes an den Randzonen festgestellt; die Metallkonzentrationen in der Außen-und Innenzone sind annähernd gleich. Diese Metallmengen wurden aufgenommen:

|  | Aus Lösung A | Aus Lösung B |
|---|---|---|
| $CeO_2$ | 6,91 g = 0,846 % $CeO_2$ | 8,54 g = 1,07 % $CeO_2$ |
| $ZrO_2$ | 9,22 g = 1,13 % $ZrO_2$ | 10,43 g = 1,30 % $ZrO_2$ |
| $Fe_2O_3$ | 4,38 g = 0,536% $Fe_2O_3$ | 5,51 g = 0,69 % $Fe_2O_3$ |
| Pt | 1,39 g = 0,17 % Pt = 1702 ppm | 1,454 g = 0,182% Pt = 1822 ppm |
| Rh | 0,258 g = 0,031% Rh = 316 ppm | 0,291 g = 0,036% Rh = 364 ppm |
| NiO | ---- | 4,91 g = 0,615% NiO |

Beispiel 8 (Vergleichsbeispiel)

In eine auf pH 10 eingestellte ammoniakalische Lösung von Nitrilotriessigsäure wurde eine wäßrige Lösung von $H_2[PtCl_6]$, $RhCl_3$ und $Ce(NO_3)_3$ im Gewichtsverhältnis Pt : Rh : Ce = 5 : 1 : 32 unter Rühren eingetragen, wobei zur Konstanthaltung des pH-Wertes kontinuierlich Ammoniak zugegeben wurde und wobei das Molverhältnis (Pt + Rh + Ce) : NTE = 1 : 2 betrug. Nach Verdünnen mit Wasser wurde eine Tränklösung erhalten, welche 5000 mg Pt, 1000 mg Rh und 32500 mg Ce pro Liter enthielt.

Ein aus Cordierit bestehender, mit einer Zwischenschicht von 22,3 Gewichts% $\gamma$-$Al_2O_3$ versehener Wabenkörper wies ein Volumen von 1,24 l und nach Glühen bei 600°C eine BET-Oberfläche von 30 m²/g auf. Durch den Wabenkörper ließ man 1 Minute lang die ammoniakalische Lösung kontinuierlich hindurchströmen. Der Wabenkörper, welcher ein Wasseraufnahmevermögen von 145 ml aufwies, konnte theoretisch bei der Tränkung 725 mg Pt, 145 mg Rh und 4713 mg Ce aufnehmen; das sind bei einem Gewicht des Wabenkörpers von 650 g

1115 ppm Pt

223 ppm Rh

7248 ppm Ce

Nach 10stündiger Trocknung im Trockenschrank bei 100°C wurden Edelmetallgehalte an der Außenzone des Wabenkörpers von 2650 ppm Pt und 560 ppm Rh gefunden.

Beispiel 9 (gemäß der Erfindung)

Beispiel 8 wurde mit der Änderung wiederholt, daß zur Trocknung des imprägnierten Wabenkörpers zunächst Luft mit Zimmertemperautr 10 Sekunden lang und anschließend 2 Minuten auf 250°C vorgeheizte Luft durch ihn hindurchgeblasen wurde.

Nach der Trocknung wies der Wabenkörper in seiner Außenzone Gehalte von 1225 ppm Pt und 310 ppm Rh auf.

Beispiel 10 (gemäß der Erfindung)

In eine Lösung aus 143,6 g $Ce(NO_3)_3 . 6H_2O$
320,0 g $Zr(NO_3)_4$
22,03 g $H_2[PtCl_6]$
4,65 g $RhCl_3$

wurde nach Einrühren von 352 g fester Nitrilotriessigsäure solange Ammoniak eingegeben, bis alles gelöst war. Nach Einstellung eines pH-Wertes von 10 durch Zugabe von weiterem wäßrigem Ammoniak wurde auf 2 l aufgefüllt. Die klare, gelblich gefärbte Tränklösung enthielt 4,41 g Pt, 0,88 g Rh, 32,0 g $ZrO_2$, und 28,5 g $CeO_2$ pro Liter.

Durch einen mit 18 Gewichts% $\gamma$-$Al_2O_3$ beschichteten keramischen Wabenkörper, welcher bei einem Gesamtgewicht von 850 g ein Volumen von 1,24 l sowie ein Wasseraufnahmevermögen von 165 g aufwies, ließ man 1 Minute lang die Tränklösung hindurchströmen. Anschließend wurde der Wabenkörper durch Hindurchblasen von auf 250°C vorgeheizter Luft (ca. 600 $Nm^3/h$) 90 Sekunden lang getrocknet und 2 Stunden bei 550°C getempert.

Danach ließ man die Tränklösung erneut 1 Minute lang durch den Wabenkörper hindurchströmen und wiederholte die Trocknung und die Temperung. Nunmehr waren auf den Wabenkörper 1,45 g Pt, 0,29 g Rh, 0,9 % Ce und 0,9 % Zr aufgetragen. Die Edelmetallkonzentrationen von Außen-und Innenzone des Wabenkörpers waren annähernd gleich:

|    | Außenzone | Innenzone |
|----|-----------|-----------|
| Pt | 1680      | 1720      |
| Rh | 320       | 345       |

Beispiel 11 (gemäß der Erfindung)

In eine wäßrige Lösung aus 171 g $Ce(NO_3)_3 . 6H_2O$
382 g $Zr(NO_3)_4$
14 g $H_2[PtCl_6]$
28 g $PdCl_2$

wurde nach Einrühren von 430 g fester $N(CH_2COOH)_3$ solange konzentrierte wäßrige Ammoniaklösung eingegeben, bis alles gelöst und ein pH-Wert von 10 eingestellt war. Das Lösungsmittelvolumen betrug 2 l.

Ein Wabenkörper mit einem Gesamtgewicht von 800 g, einer $\gamma$-$Al_2O_3$-Beschichtung von 16 % und einem Wasseraufnahmevermögen von 130 g wurde analog Beispiel 10 mit der wäßrigen Lösung behandelt, getrocknet und getempert.

7

Der imprägnierte Wabenkörper wies mit einer Streubreite von ± 5 % Gehalte von
0,72 g Pt = 900 ppm Pt
0,72 g Pd = 900 ppm Pd
0,9 % Ce = 9000 ppm Ce
0,9 % Zr = 9000 ppm Zr
sowohl an seiner Außenzone und als auch in seiner Innenzone auf.

**Ansprüche**

1. Verfahren zur Herstellung eines Trägerkatalysators durch Imprägnieren eines mit einer Schicht aus hitzebeständigem Metalloxid versehenen keramischen Wabenkörpers mit der wäßrigen Lösung mindestens einer löslichen Verbindung von Platin, Rhodium oder Palladium und gegebenenfalls von Salzen von Nichtedelmetallen, Trocknung des imprägnierten Wabenkörpers und seine Temperung, dadurch gekennzeichnet , daß man durch den imprägnierten Wabenkörper ein über seinen Querschnitt gleichmäßig verteiltes Trocknungsgas mit Temperaturen zwischen 20 und 400°C strömen läßt, wobei man Temperatur und Menge des Trocknungsgases so wählt, daß die Wasserverdampfung aus dem imprägnierten Wabenkörper nach 30 bis 300 Sekunden abgeschlossen ist und daß man den getrockneten imprägnierten Wabenkörper 1 bis 3 Stunden bei Temperaturen bis 1000°C tempert.

2. Verfahren nach Anspruch 1, dadurch gekennzeichnet, daß als Trocknungsgas Luft dient.

3. Verfahren nach Anspruch 1, dadurch gekennzeichnet, daß als Trocknungsgas ein Brennerabgas dient.

4. Verfahren nach Anspruch 3, dadurch gekennzeichnet , daß dem Brennerabgas zur Temperatureinstellung Kaltgas zugemischt ist.